# EUROPEAN PATENT APPLICATION

(11) **EP 1 389 030 A2**
(43) Date of publication of application: **11.02.2004**
(21) Application number: 03018052.5
(22) Date of filing: 07.08.2003
(51) Int. Cl.: H04R 1/02, F21V 33/00

(54) **Multifunction lighting fixture**

(30) Priority: 08.08.2002 IT mi20021806
(71) Applicant: ARTEMIDE GROUP S.p.A., 20010 Pregnana Milanese (IT)
(72) Inventor: Fantoni, Fabrizio c/o Artemide Group S.p.A., 20010 Pregnana Milanese (IT); Franzosi, Roberto Artemide Group S.p.A., 20010 Pregnana Milanese (IT)
(74) Representative: Franzolin, Luigi

(57) **Abstract**

A lighting fixture (1) includes a supporting body (2), a number of light sources (3) housed in the supporting body (2), and at least one loudspeaker (5) carried by the supporting body (2). The loudspeaker (5) has a flat resonant plate (16) made of transparent material, and through which passes a light beam emitted by the light sources (3).

## Description

The present invention relates to a multifunction lighting fixture.

As is known, in the design of both home and workplace environments, more and more attention is now paid to combining different sensory effects and stimuli to enhance the comfort and well-being of the occupants. In particular, combining taped music or radio broadcasting outlets with lighting sources of various types has been found to provide for a wide range of highly effective solutions.

On the other hand, the range of solutions achievable is restricted by the bulk involved in using separate lighting and sound equipment.

Home and/or office fixtures incorporating both light sources and sound equipment are therefore desirable, and which, in particular, should be so designed that light emission is unaffected by the presence of sound equipment, such as amplifiers, and, conversely, sound broadcasting quality is unaffected by the presence of light sources.

It is an object of the present invention to provide a multifunction lighting fixture designed to solve the above problem.

According to the present invention, there is provided a multifunction lighting fixture comprising a supporting body, and lighting means housed in said supporting body; characterized by comprising at least one loudspeaker carried by said supporting body.

According to a further aspect of the invention, the loudspeaker comprises a resonant plate made of transparent material.

The loudspeaker can thus be inserted directly inside the same supporting body housing the lighting means, without interfering with light diffusion into the surrounding environment, i.e. without intercepting or dimming the light beam emitted by the lighting means, so that light is diffused substantially uniformly from the supporting body, with no annoying shadow or high-contrast areas. The resulting lighting effect is therefore excellent, while the fixture as a whole is compact and poses no problems in terms of size. Another advantage lies in the loudspeaker, and particularly the transparent resonant plate, possibly being left exposed to enhance the appearance of the fixture.

According to a further aspect of the invention, the lighting fixture comprises a receiving circuit for picking up an audio signal emitted by a remote source; and a control circuit connected to said receiving circuit and to exciting means to drive said exciting means on the basis of said audio signal.

The loudspeaker may therefore advantageously be employed at a distance, in particular with no need for direct cable connection to a music and/or radio broadcasting system, which obviously further increases the versatility of the invention in terms of interior design.

According to a further aspect of the invention, the lighting fixture comprises an air filtering device, preferably comprising an electrostatic filter.

The lighting fixture may therefore also provide for effective air purification. The electrostatic filter, in fact, is highly effective in filtering fine dust and other suspended microparticles, is of more or less unlimited working life with very little maintenance, consumes very little energy, and is silent-operating. The invention therefore advantageously integrates yet another function for improving the overall quality of the environment in which it is employed. Moreover, the filtering device can be housed easily in the base of the lighting fixture, so as not to interfere with either light diffusion or sound production by the loudspeaker.

A number of non-limiting embodiments of the present invention will be described by way of example with reference to the accompanying drawings, in which:
Figure 1 shows a front view of a lighting fixture in accordance with a first embodiment of the present invention;
Figure 2 shows a side view of the Figure 1 lighting fixture sectioned along line II-II;
Figure 3 shows a simplified block diagram of the Figure 1 lighting fixture;
Figure 4 shows a larger-scale front view, sectioned along line IV-IV, of a detail in Figure 2;
Figure 5 shows a cross section of a lighting fixture in accordance with a second embodiment of the present invention;
Figure 6 shows a cross section of a lighting fixture in accordance with a third embodiment of the present invention.

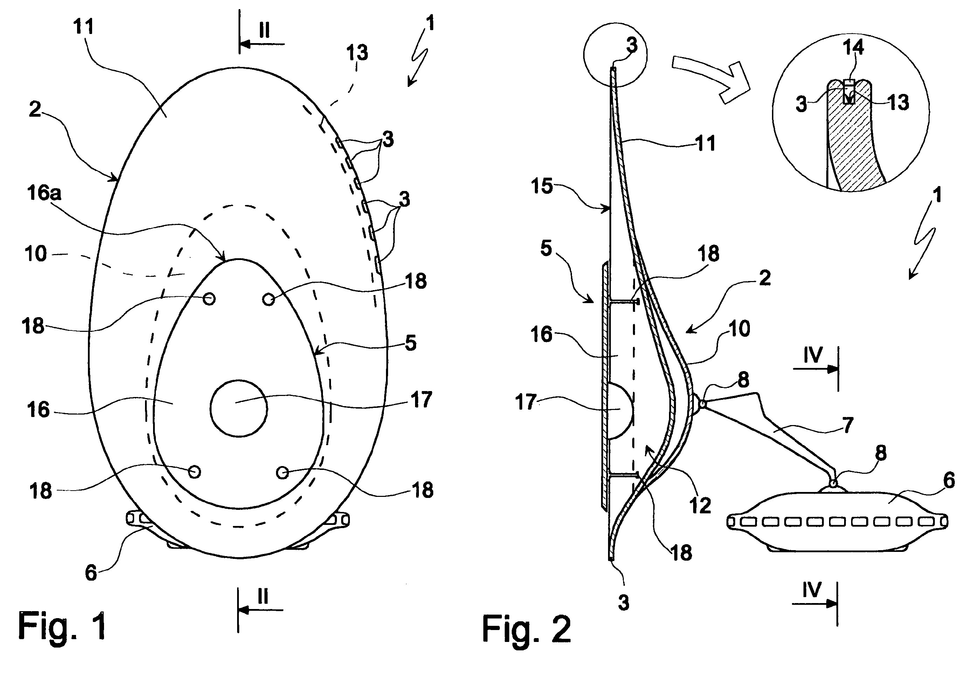

Number 1 in Figures 1 and 2 indicates as a whole a multifunction lighting fixture comprising a supporting body 2, a number of light sources 3 housed in supporting body 2, and a loudspeaker 5 carried by supporting body 2. Supporting body 2 is connected to a base 6 by an arm 7 having a spherical joint 8 at each end, and preferably comprises a concave opaque portion 10 elongated along an axis, and a transparent portion 11 carried by opaque portion 10. More specifically, opaque portion 10 is connected directly to one of spherical joints 8 of arm 7; transparent portion 11, made of plastic material, is substantially tank-shaped and projects laterally from opaque portion 10; and a recess 12 is defined inside transparent portion 11.

In the Figure 1 embodiment of the invention, light sources 3 are distributed along a peripheral seat 13 in transparent portion 11 of supporting body 2, are oriented towards recess 12, and are held in place by a peripheral edge 14. Light sources 3 are preferably RGB LEDs, i.e. comprise sources corresponding to three basic colours (red, green, blue), and are adjustable independently of one another, so that both the intensity and colour of the light beam emitted by lighting fixture 1 can be controlled.

Loudspeaker 5 comprises a resonant plate 16 associated with a known exciter 17. Resonant plate 16 is a flat plate made of substantially transparent material, as described in Patent EP-A-847661, and in particular is made of polymethacrylate or polymethyl methacrylate, and has a curved edge 16a. Alternatively edge 16a of resonant plate 16 is defined by straight portions connected by curved portions having at least two different radii of curvature. Resonant plate 16 is housed in the mouth of recess 12, substantially flush with an edge 15 of recess 12, is fitted to transparent portion 11 of supporting body 2 by means of a number of supporting feet 18, and is preferably so located that at least one portion of a light beam emitted by light sources 3 passes through it.

Exciter 17, e.g. a piezoelectric transducer, is fitted to resonant plate 16, and extends inwards of recess 12. More specifically, exciter 17 is located at a minimum-damping portion of resonant plate 16 defined both by the intrinsic characteristics of resonant plate 16 (shape, size, material) and by location of the anchoring points to supporting body 2, thus optimizing response of resonant plate 16 to force pulses supplied by exciter 17, and so maximizing the efficiency with which such force pulses are converted into sound waves.

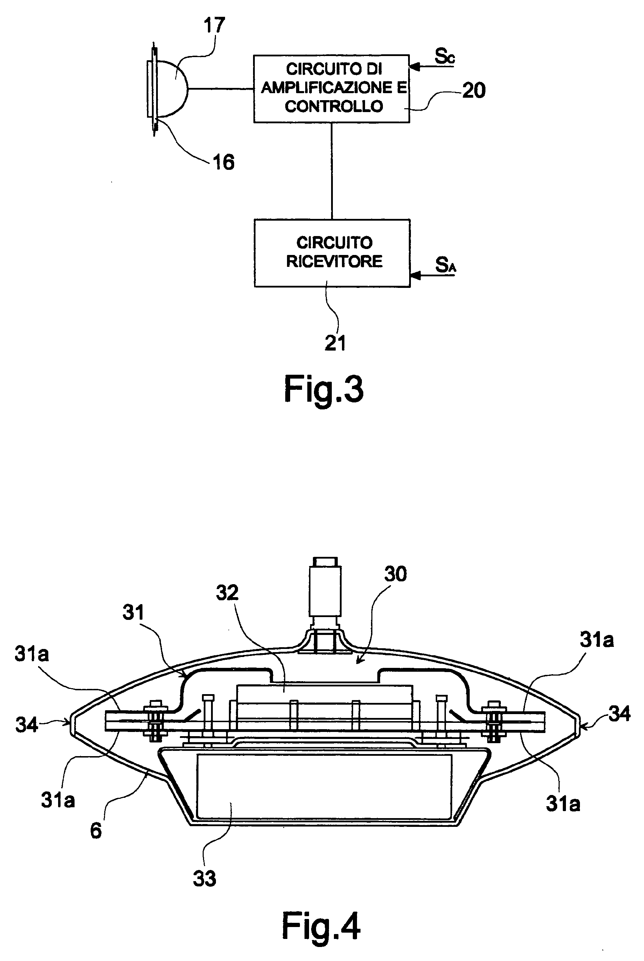

With reference to the Figure 3 diagram, lighting fixture 1 also comprises a known control circuit 20, and a known radio wave receiving circuit 21. More specifically, control circuit 20 receives control signals S_{c} generated by a remote control or manual controls of fixture 1 (also known and not shown); and receiving circuit 21 picks up an audio signal S_{A} transmitted by a remote source (not shown). Control circuit 20 and receiving circuit 21 are preferably housed in supporting body 2 of lighting fixture 1. Control circuit 20 is connected electrically to receiving circuit 21 and to exciter 17, and drives exciter 17 on the basis of the audio signal S_{A} picked up by receiving circuit 21, and control signals S_{c}. That is, exciter 17 is controlled by control circuit 20 to vibrate resonant plate 16 in controlled manner. More specifically, control circuit 20 provides for turning loudspeaker 5 on and off, and for regulating the sound volume, so that the audio signal S_{A} transmitted by the source can be reproduced by loudspeaker 5 with no need for a direct cable connection.

As shown in Figure 4, lighting fixture 1 also comprises an air filtering device 30 housed in base 6. More specifically, the filtering device comprises a known electrostatic filter 31 having facing plates 31a; a suction fan 32; and an electronic control board 33 connected in known manner to electrostatic filter 31 and fan 32; and base 6 has a peripheral grille 34 for protecting filter 31. In actual use, fan 32 draws air through grille 34 and plates 31a of electrostatic filter 31, where normally suspended fine dust is retained. Lighting fixture 1 thus also provides for effective air purification. Filtering device 30 is preferably controllable by a local or remote control by means of a known receiving device (not shown) on electronic control board 33.

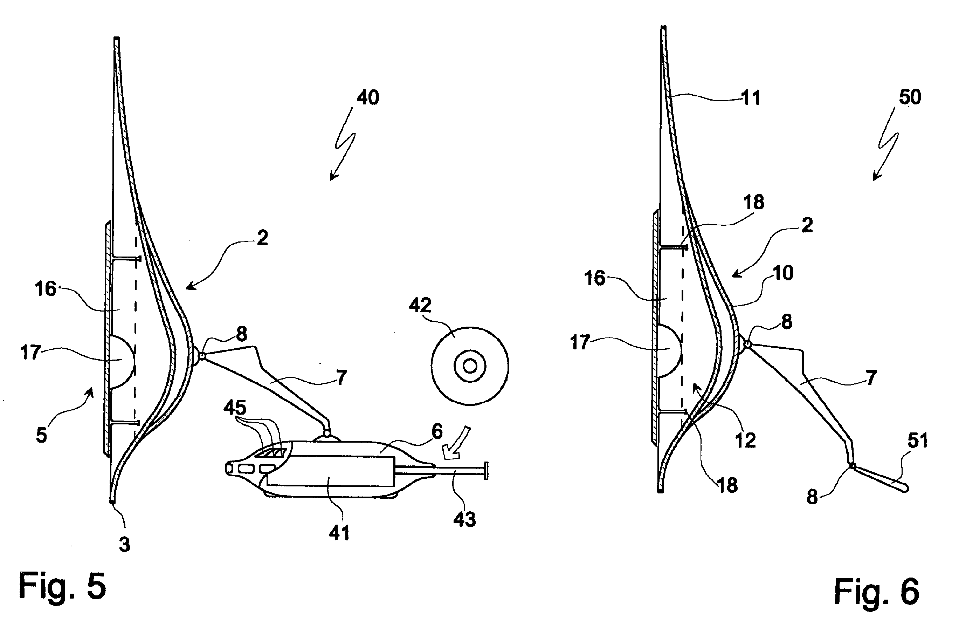

Figure 5, in which parts similar to those already described are indicated using the same reference numbers, shows a lamp 40 in accordance with an alternative embodiment of the invention, and which comprises supporting body 2 connected to base 6 by arm 7; light sources 3; and loudspeaker 5 comprising resonant plate 16 and exciter 17.

In this case, base 6 houses a reading device 41, connected to exciter 17, for playing audio recordings, e.g. optical disks 42, and which has a drawer 43, shown in the extracted position in Figure 5, by which to insert optical disks 42. Base 6 also has buttons 45 for controlling reading device 41, so that lamp 40 may also be used advantageously for playing music independently, with no system connection needed.

In a further embodiment of the invention shown in Figure 6, in which parts similar to those already described are indicated using the same reference numbers, a lighting fixture 50 has a base 51 connected to arm 7. In this case, transparent portion 11 of supporting body 2 also acts as a supporting member.

Clearly, changes may be made to the multifunction lighting fixture as described herein without, however, departing from the scope of the present invention.

Firstly, the supporting body may be formed otherwise than as shown, and, in particular, may be formed in one piece or comprise more than two portions; the loudspeaker may be housed otherwise than as shown in the embodiment described above; and the same lighting fixture may incorporate a number of loudspeakers, each with a respective transparent resonant plate.

Moreover, the light sources may be of any type, in particular, semiconductor photoemitting devices other than the type described, fluorescent lamps, or incandescent lamps.

## Claims

1. A lighting fixture comprising a supporting body (2), and lighting means (3) housed in said supporting body (2); **characterized by** comprising at least one loudspeaker (5) carried by said supporting body (2).

2. A lighting fixture as claimed in Claim 1, **characterized in that** said loudspeaker (5) comprises a resonant plate (16) made of transparent material.

3. A lighting fixture as claimed in Claim 2, **characterized in that** said transparent material is selected from the group consisting of: polymethacrylate, polymethyl methacrylate.

4. A lighting fixture as claimed in Claim 2 or 3, **characterized in that** said resonant plate (16) is a flat plate.

5. A lighting fixture as claimed in any one of Claims 2 to 4, **characterized in that** said resonant plate (16) is so located that at least a portion of a light beam emitted by said lighting means (3) passes through it.

6. A lighting fixture as claimed in any one of Claims 2 to 5, **characterized in that** said lighting means (3) are oriented towards a recess (12) of said supporting body (2); said resonant plate (16) being located at a mouth of said recess (12).

7. A lighting fixture as claimed in any one of Claims 2 to 6, **characterized in that** said lighting means (3) comprise a number of semiconductor photoemitting devices distributed along a peripheral seat (13) of said supporting body (2).

8. A lighting fixture as claimed in any one of Claims 2 to 7, **characterized by** comprising exciting means (17) associated with said resonant plate (16).

9. A lighting fixture as claimed in Claim 8, **characterized in that** said exciting means (17) are carried by said resonant plate (16), inside said supporting body (2).

10. A lighting fixture as claimed in Claim 8 or 9, **characterized by** comprising a receiving circuit (21) for picking up an audio signal (S_{A}) emitted by a remote source; and a control circuit (20) connected to said receiving circuit (21) and to said exciting means (17) to drive said exciting means (17) on the basis of said audio signal ( S_{A}) .

11. A lighting fixture as claimed in any one of the foregoing Claims, **characterized by** comprising an air filtering device (30).

12. A lighting fixture as claimed in Claim 11, **characterized in that** said filtering device (30) comprises an electrostatic filter (31).

13. A lighting fixture as claimed in any one of the foregoing Claims, **characterized by** comprising a reading device (41) for playing audio recordings and associated with said loudspeaker (5).
